# EUROPÄISCHE PATENTSCHRIFT

(11) **EP 1 172 883 B1**
(45) Veröffentlichungstag und Bekanntmachung des Hinweises auf die Patenterteilung: **11.07.2007**
(21) Anmeldenummer: 01110539.2
(22) Anmeldetag: 28.04.2001
(51) Int. Cl.: H01Q 1/12, B60C 23/04

(54) **Antennenvorrichtung, insbesondere für ein Kraftfahrzeug**
Antenna device, in particular for an automobile
Dispositif d'antenne, en particulier pour un véhicule automobile

(30) Priorität: 06.06.2000 DE 10027882
(43) Veröffentlichungstag der Anmeldung: 16.01.2002
(73) Patentinhaber: Dr.Ing. h.c. F. Porsche Aktiengesellschaft, 70435 Stuttgart (DE)
(72) Erfinder: Baum, Michael, 75233 Tiefenbronn-Lehningen (DE); Deuschle, Achim, 72649 Wolfschlungen (DE)

(56) Entgegenhaltungen:
- DE-A- 3 544 217
- DE-A- 10 027 882
- DE-A- 19 854 176
- DE-C- 19 857 372
- GB-A- 2 234 397

## Beschreibung

Die Erfindung betrifft eine Antennenvorrichtung, insbesondere für ein Kraftfahrzeug, gemäß Oberbegriff des Anspruchs 1.

Eine gattungsgemäße Antennenvorrichtung ist aus der GB 22 34 397 A bekannt. Diese umfasst einen Antennenträger für eine Antenne, an dem die Antenne gehalten ist. Der Antennenträger besitzt eine Trägergrundplatte mit einer Befestigungseinrichtung, die bei der bekannten Vorrichtung als Schwenkachse ausgebildet ist, mit der die Antenne mit ihrem Antennenträger an einer Abdeckung schwenkbar angelenkt ist. Die Trägergrundplatte umfasst wenigstens eine die Antenne teilweise umgreifende, Rastarme aufweisende Rasteinrichtung, die auch als Clips-Verbindung bezeichnet wird. Bei der bekannten Antennenvorrichtung sind zwei Rastarmpaare vorgesehen, die - in axialer Richtung der Antenne gesehen - mit Abstand zueinander liegen. An einem Ende der Trägergrundplatte ist benachbart zu einem Rastarmpaar eine die Antenne in axialer Richtung haltende Fixiereinrichtung vorgesehen. Die Verwendung der bekannten Antennenvorrichtung an einem Kraftfahrzeug erscheint durch die bei Kraftfahrzeugen auftretenden Vibrationen im Fahrbetrieb problematisch. Eine Clips-Verbindung für die Anwendung im Automobilbau ist aus DE 3544217 A1 bekannt.

Es ist daher Aufgabe der Erfindung, eine Antennenvorrichtung der eingangs genannten Art zu schaffen, die beim Einsatz in Kraftfahrzeugen einen sicheren Halt der Antenne bietet.

Gelöst wird diese Aufgabe mit einer Antennenvorrichtung, die die in Anspruch 1 genannten Merkmale zeigt. Weitere, die Erfindung vorteilhaft ausgestaltende Merkmale sind in den Unteransprüchen enthalten.

Die mit der Erfindung hauptsächlich erzielten Vorteile sind darin zu sehen, dass die Antenne an der Trägergrundplatte in axialer Richtung der Antenne unverschiebbar ist. Außerdem wird die Antenne in der Rasteinrichtung des erfindungsgemäßen Antennenträgers sicher gehalten. Somit ist deren Verwendung in Kraftfahrzeugen, beispielsweise geländegängigen Personenwagen, vorteilhaft, da auch unter harten Einsatzbedingungen die Antenne sicher befestigt ist. Vorzugsweise ist die Antenne Bestandteil einer Reifendruckkontroll-Vorrichtung, bei der jedem Rad, beispielsweise auch dem Ersatzrad, eine derartige Antennenvorrichtung zugeordnet ist. In bevorzugter Ausführungsform wird in jedem Radkasten bzw. der Ersatzradaufnahme des Fahrzeugs jeweils eine Antennenvorrichtung angebracht, die mit einem an dem Rad angebrachten Sensor über eine Luftschnittstelle kommuniziert.

Die Erfindung wird nachfolgend anhand von Ausführungsbeispielen mit Bezug auf die Zeichnung näher erläutert.

Es zeigen:
- Fig. 1: eine Seitenansicht eines Antennenträgers,
- Fig. 2: eine Draufsicht auf den Antennenträger gem. Fig. 1 und
- Fig. 3: eine Schnittdarstellung entlang der Linie III-II in Fig. 2, wobei in den Antennenträger eine Antenne eingesetzt ist.

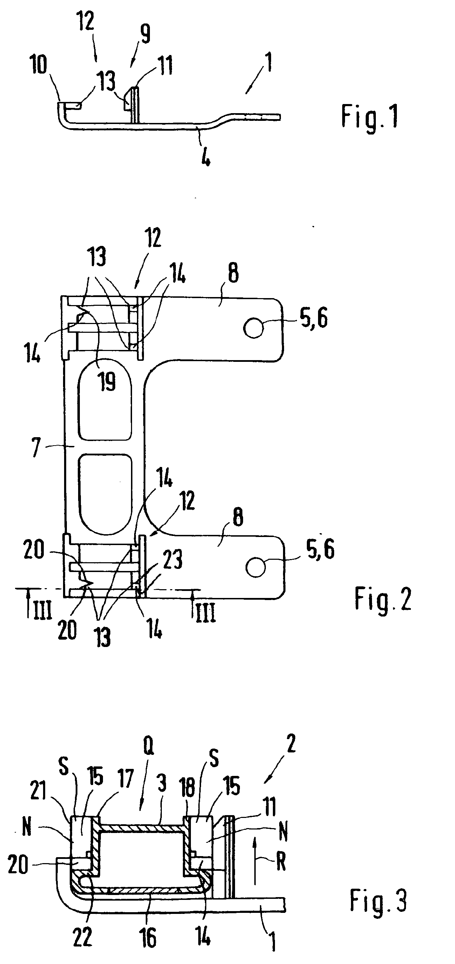

Die Fig. 1 zeigt einen Antennenträger 1 einer in Fig. 3 im Schnitt wiedergegebenen Antennenvorrichtung 2, die zumindest den Antennenträger 1 für eine daran gehaltene bzw. befestigte Antenne 3 aufweist. Die Antennenvorrichtung 2 kann auch die Antenne 3 umfassen.

Der Antennenträger 1 besitzt eine Trägergrundplatte 4, an der eine Befestigungseinrichtung 5 vorgesehen ist, die im vorliegenden Ausführungsbeispiel als wenigstens ein Durchbruch 6 realisiert ist, durch den ein Befestigungsmittel, beispielsweise eine Schraube, hindurchgreift, so dass der Antennenträger 1 an einem hier nicht dargestellten Kraftfahrzeug, insbesondere in einem Radkasten, befestigt werden kann. In Draufsicht gesehen ist die einstückige Trägergrundplatte 4 vorzugsweise U-förmig ausgestaltet und besitzt eine Basis 7 sowie zwei daran vorgesehene Laschen 8, in denen jeweils einer der Durchbrüche 6 ausgebildet ist. An der Trägergrundplatte 4 ist eine Rasteinrichtung 9 vorgesehen, die wenigstens zwei Rastarme 10 und 11 besitzt, die ein Rastarmpaar 12 bilden. Aus Fig. 2 wird klar, dass beabstandet zueinander zwei Rastarmpaare 12 an der Trägergrundplatte 4 vorgesehen sind. Die Rastarmpaare 12 umgreifen den Querschnitt Q (Fig. 3) der Antenne 3 teilweise.

Ferner besitzt die Trägergrundplatte 4 eine Fixiereinrichtung 13, die die Antenne 3 in axialer Richtung - in Fig. 3 senkrecht zur Zeichnungsebene - sowohl in die Zeichnungsebene hinein als auch aus der Zeichnungsebene heraus fixiert. Die Fixiereinrichtung 13 wird von zumindest einem Fixiervorsprung 14 gebildet, der vorzugsweise an der Innenseite zumindest eines Rastarms 10 und/oder 11 ausgebildet ist und in eine Ausnehmung 15 an der Antenne 3 eingreift. Der Fixiervorsprung 14 kann alternativ an der Basis 7 oder im Übergangsbereich zwischen Basis 7 und Lasche 8 vorgesehen sein und sich in Richtung zur Antenne 3 erstrecken. Die Ausnehmung 15 ist beispielsweise an einem die Antenne 3 umgebenden Gehäuse 16 vorgesehen. Im gezeigten Ausführungsbeispiel besitzt jedes Rastarmpaar 12 drei Fixiervorsprünge 14 an den Innenseiten der Rastarme 10 bzw. 11; entsprechend sind eine Anzahl von Ausnehmungen 15 an der Antenne 3, vorzugsweise an deren einander gegenüberliegenden Gehäuseseiten 17 und 18, vorgesehen. Die Ausnehmung 15 kann in das Gehäuse 16 als Nut N eingebracht oder - wie in Fig. 3 zu sehen - durch parallel und beabstandet zueinander verlaufende Stege gebildet sein, von denen lediglich ein Steg S zu sehen ist. Die Stege S bzw. Nuten N sind an der entsprechenden Gehäuseseite 17 bzw. 18 angeordnet. Das Gehäuse 16 mit seinen Stegen S kann einstückig realisiert sein. Der Antennenträger 1 mit seiner Grundplatte 4, der Rasteinrichtung 9 und der Fixiereinrichtung 14 ist vorzugsweise einstückig ausgebildet und wird beispielsweise als Kunststoffteil hergestellt.

Zumindest einer der Fixiervorsprünge 14 ist - in Draufsicht gesehen - etwa viereckig oder dreieckförmig ausgebildet, wobei die freie Ecke 19 des am Rastarm 10 vorgesehenen dreieckigen Fixiervorsprungs 14 in Richtung der Gehäuseseite 17 bzw. Antenne 3 zeigt. In Draufsicht gesehen ist die Breite der Ausnehmung 15 so bemessen, dass die schrägen Dreieckseiten 20, von denen in Fig. 3 lediglich eine Dreieckseite 20 wiedergegeben ist, mit dem Ausnehmungsrand 21 bzw. den Stegen S zusammenwirken bzw. an dem Ausnehmungsrand 21 bzw. Stegen S klemmend anliegen. Ist der Fixiervorsprung 14 viereckig ausgebildet, liegen seine Seitenflächen 23 etwa parallel zu dem Ausnehmungsrand 21 bzw. Stegen S oder daran an. Somit wird in axialer Richtung eine eindeutige Fixierung der Antenne 3 an dem Antennenträger 1 erreicht. Das heißt, dass die Antenne 3 - entlang ihrer Längserstreckung gesehen - in beiden Richtungen unverschiebbar relativ zum Antennenträger 1 ist. Dadurch, dass der Fixiervorsprung 14 im wesentlichen am Boden 22 der Ausnehmung 15 anliegt, ist die Antenne 3 auch in einer von dem Antennenträger 1 weggerichteten Richtung R sicher gehalten, wobei die Richtung R etwa senkrecht zur Trägergrundplatte 4 und etwa parallel zu dem Rastarm 11 verläuft. Mithin ist die Antenne 3 an dem Antennenträger 1 sicher gehalten und löst sich auch bei Vibrationen des Kraftfahrzeugs und/oder bei dessen Geländeeinsatz nicht.

## Patentansprüche

1. Antennenvorrichtung (2), insbesondere für ein Kraftfahrzeug, mit einem Antennenträger (1) für eine Antenne (3), der eine Trägergrundplatte (4) mit einer Befestigungseinrichtung (5) aufweist, wobei an der Trägergrundplatte (4) wenigstens eine die Antenne (3) teilweise umgreifende, Rastarme (10, 11) eines Rastarmpaares (12) aufweisende Rasteinrichtung (9) und eine die Antenne (3) in axialer Richtung haltende Fixiereinrichtung (13) vorgesehen sind, **dadurch gekennzeichnet, dass** ein Fixiervorsprung (14) der Fixiereinrichtung (13) in eine an der Antenne (3) vorgesehene Ausnehmung (15) eingreift, wobei die Ausnehmung (15) einen Boden (22) und einen Ausnehmungsrand (21) aufweist, dass der Fixiervorsprung (14) mit dem Ausnehmungsrand (21) zusammenwirkt, um die Antenne (3) in axialer Richtung zu fixieren, dass der Fixiervorsprung (14) an dem Boden (22) anliegt, wodurch die Antenne (3) in einer von dem Antennenträger (1) weggerichteten, etwa parallel zu dem Rastarm (10, 11) verlaufenden Richtung (R) an dem Antennenträger (1) gehalten ist, und dass ein derartiger Fixiervorsprung (14) an jedem Rastarm (10, 11) des Rastarmpaares (12) angeordnet und in eine entsprechende Ausnehmung (15) an der Antenne (1) eingreift.

2. Antennenvorrichtung nach Anspruch 1, **dadurch gekennzeichnet, dass** die Trägergrundplatte (4) - in Draufsicht gesehen - U-förmig ist, dass die Fixiereinrichtung (13) an der Basis (7) der Trägergrundplatte (4) angeordnet ist und dass an Laschen (8) der Trägergrundplatte (4) die Befestigungseinrichtung (5) ausgebildet ist.

3. Antennenvorrichtung nach Anspruch 1, **dadurch gekennzeichnet, dass** die Ausnehmung (15) an einem Antennengehäuse (16) vorgesehen ist.

4. Antennenvorrichtung nach Anspruch 1, **dadurch gekennzeichnet, dass** die Rasteinrichtung (9) zwei Rastarmpaare (12) aufweist, die an der Basis (7) der Trägergrundplatte (4) ausgebildet sind.

5. Antennenvorrichtung nach einem der vorhergehenden Ansprüche, **dadurch gekennzeichnet, dass** einer der Fixiervorsprünge (14) eines Rastarmpaares (12) - in Draufsicht gesehen - etwa dreieckförmig ist, dass eine Ecke (19) des Fixiervorsprungs (14) in Richtung zur Antenne (3) zeigt und dass die Dreieckseiten (20) des Fixiervorsprungs (14) an dem Rand (21) der Ausnehmung (15) anliegen.

## Claims

1. An antenna device (2), especially for a motor vehicle, with an antenna support (1) for an antenna (3), which antenna support (1) has a supporting base plate (4) with a fastening device (5), wherein at least one locking device (9), which partly engages round the antenna (3) and has locking arms (10, 11) of a locking-arm pair (12), and a fixing device (13) which holds the antenna (3) in the axial direction are provided on the supporting base plate (4), **characterised in that** a fixing projection (14) of the fixing device (13) engages in a recess (15) provided in the antenna (3), wherein the recess (15) has a base (22) and a recess edge (21), **in that** the fixing projection (14) co-operates with the recess edge (21) in order to fix the antenna (3) in the axial direction, **in that** the fixing projection (14) rests against the base (22), whereby the antenna (3) is held on the antenna support (1) in a direction (R) directed away from the antenna support (1) and extending approximately parallel to the locking arm (10, 11), and **in that** a fixing projection (14) of this type is arranged on each locking arm (10, 11) of the locking-arm pair (12) and engages in a corresponding recess (15) in the antenna (1).

2. An antenna device according to claim 1, **characterised in that** the supporting base plate (4) - seen in plan view - is U-shaped, **in that** the fixing device (13) is arranged on the foot (7) of the supporting base plate (4) and **in that** the fastening device (5) is formed on tongues (8) of the supporting base plate (4).

3. An antenna device according to claim 1, **characterised in that** the recess (15) is provided in an antenna housing (16).

4. An antenna device according to claim 1, **characterised in that** the locking device (9) has two locking-arm pairs (12) formed on the foot (7) of the supporting base plate (4).

5. An antenna device according to any one of the preceding claims, **characterised in that** one of the fixing projections (14) of a locking-arm pair (12) - seen in plan view - is approximately triangular, **in that** one corner (19) of the fixing projection (14) points towards the antenna (3) and **in that** the triangle sides (20) of the fixing projection (14) rest against the edge (21) of the recess (15).

## Revendications

1. Dispositif d'antenne (2), en particulier pour un véhicule automobile, comprenant un support d'antenne (1) pour une antenne (3), qui présente un socle support (4) avec un système de fixation (5), au moins un système d'encliquetage (9) entourant partiellement l'antenne (3) et présentant des bras d'encliquetage (10, 11) d'une paire de bras d'encliquetage (12) et un système de fixation (13) maintenant l'antenne (3) dans la direction axiale étant prévus sur le socle support (4), **caractérisé en ce qu'**une saillie de fixation (14) du système de fixation (13) s'engage dans un évidement (15) prévu sur l'antenne (3), l'évidement (15) présentant un fond (22) et un bord d'évidement (21), **en ce que** la saillie de fixation (14) agit en interaction avec le bord d'évidement (21) afin de fixer l'antenne (3) dans la direction axiale, **en ce que** la saillie de fixation (14) s'appuie sur le fond (22), l'antenne (3) étant maintenue dans une direction (R) dirigée à partir du support d'antenne (1) et agencée à peu près parallèlement au bras d'encliquetage (10, 11) sur le support d'antenne (1) et **en ce qu'**une telle saillie de fixation (14) est disposée sur chaque bras d'encliquetage (10, 11) de la paire de bras d'encliquetage (12) et s'engage dans un évidement (15) approprié sur l'antenne (1).

2. Dispositif d'antenne selon la revendication 1, **caractérisé en ce que** le socle support (4) est en forme de U, vu en vue de dessus, **en ce que** le système de fixation (13) est disposé sur la base du socle support (4) et **en ce que** le système de fixation (5) est conçu sur des pattes (8) du socle support (4).

3. Dispositif d'antenne selon la revendication 1, **caractérisé en ce que** l'évidement (15) est prévu sur un boîtier d'antenne (16).

4. Dispositif d'antenne selon la revendication 1, **caractérisé en ce que** le système d'encliquetage (9) présente deux paires de bras d'encliquetage (12), qui sont conçues sur la base (7) du socle support (4).

5. Dispositif d'antenne selon l'une quelconque des revendications précédentes, **caractérisé en ce que** l'une des saillies de fixation (14) d'une paire de bras d'encliquetage (12), en vue de dessus, a une forme à peu près triangulaire, **en ce qu'**un angle (19) de la saillie de fixation (14) est dirigé vers l'antenne (3) et **en ce que** les côtés du triangle (20) de la saillie de fixation (14) s'appuient sur le bord (21) de l'évidement (15).
